# EUROPÄISCHE PATENTSCHRIFT

(11) **EP 1 185 412 B1**
(45) Veröffentlichungstag und Bekanntmachung des Hinweises auf die Patenterteilung: **13.11.2002**
(21) Anmeldenummer: 00938786.1
(22) Anmeldetag: 14.06.2000
(51) Int. Cl.: B29C 65/78, B29C 65/48, G11B 7/26

(54) **VORRICHTUNG ZUM ZUSAMMENFÜGEN VON SUBSTRATEN**
DEVICE FOR JOINING SUBSTRATES
DISPOSITIF PERMETTANT LA JONCTION DE SUBSTRATS

(30) Priorität: 16.06.1999 DE 19927514
(43) Veröffentlichungstag der Anmeldung: 13.03.2002
(73) Patentinhaber: Steag HamaTech AG, 75447 Sternenfels (DE)
(72) Erfinder: LIEDTKE, Björn, D-75038 Oberderdingen (DE); GORDT, Joachim, D-75447 Sternenfels (DE); SPEER, Ulrich, D-75239 Eisingen (DE); WISE, James, D-75447 Sternenfels (DE); ESSER, Hans-Gerd, D-75015 Bretten (DE)
(74) Vertreter: Geyer, Ulrich F., Dr. Dipl.-Phys.
(86) Internationale Anmeldenummer: EP0005440
(87) Internationale Veröffentlichungsnummer: WO00076752

(56) Entgegenhaltungen:
- EP-A- 0 793 224
- US-A- 2 705 968
- US-A- 4 701 896
- US-A- 4 704 181
- US-A- 4 768 185
- PATENT ABSTRACTS OF JAPAN vol. 013, no. 253 (P-883), 13. Juni 1989 (1989-06-13) -& JP 01 052238 A (SEIKO EPSON CORP), 28. Februar 1989 (1989-02-28)
- PATENT ABSTRACTS OF JAPAN vol. 1999, no. 05, 31. Mai 1999 (1999-05-31) -& JP 11 053769 A (RICOH CO LTD), 26. Februar 1999 (1999-02-26)
- PATENT ABSTRACTS OF JAPAN vol. 015, no. 395 (P-1260), 7. Oktober 1991 (1991-10-07) -& JP 03 157834 A (JAPAN STEEL WORKS LTD:THE;OTHERS: 01), 5. Juli 1991 (1991-07-05)
- PATENT ABSTRACTS OF JAPAN vol. 1998, no. 01, 30. Januar 1998 (1998-01-30) -& JP 09 245386 A (KITANO ENG KK), 19. September 1997 (1997-09-19)

## Beschreibung

Die vorliegende Erfindung bezieht sich auf eine Vorrichtung zum Zusammenfügen von wenigstens zwei jeweils ein Innenloch aufweisenden Substraten mit einem den Innenlöchern der Substrate angepaßten Stift.

Viele Datenträger, wie beispielsweise DVD's bestehen in der Regel aus zwei miteinander verklebten Substraten, welche zum Verkleben zentriert zusammengefügt werden. Dabei wird in der Regel ein erstes mit einer Klebschicht versehenes Substrat auf einer ebenen Unterlage abgelegt und anschließend wird ein zweites Substrat mittels einer Handhabungsvorrichtung über das erste Substrat bewegt und damit zusammen gebracht. Dabei muß die Handhabungsvorrichtung sowohl in der Lage sein, die Substrate genau zueinander auszurichten, als auch die Substrate gleichmäßig zusammen zu drücken. Eine derartige Handhabungsvorrichtung ist jedoch sehr aufwendig und anfällig gegenüber Störungen, was zu Unregelmäßigkeiten beim Zusammenfügen führt und die Funktion des Datenträgers beeinträchtigt und ihn gegebenenfalls unbrauchbar macht.

Aus der US-A-5,888,433 ist eine Vorrichtung zum Zusammenfügen von zwei Substraten der Eingangs genannten Art bekannt. Die Vorrichtung weist einen aufweitbaren, aus drei Einzelteilen bestehenden Zentrierstift auf. Der Zentrierstift wird in das Innenloch eines aus zwei miteinander verklebten Substrathälften bestehenden Substrats eingefügt, und anschließend wird der Stift radial aufgeweitet. Durch das Aufweiten ergibt sich eine Zentrierung der beiden Substrathälften, nachdem sie miteinander verklebt wurden. Diese nachträgliche Zentrierung birgt eine Gefahr der Beschädigung der Substrathälften, da die auf die Substrathälften angelegte Kraft relativ hoch sein muß, um sie nach dem Verkleben relativ zueinander zu Bewegen.

Ausgehend von der oben beschriebenen Vorrichtung liegt der Erfindung die Aufgabe zugrunde, eine einfache und kostengünstige Vorrichtung zum Zusammenfügen von Substraten vorzusehen, mit der das Zusammenfügen sicher, genau und mit kleiner Ausschußrate möglich ist.

Erfindungsgemäß wird diese Aufgabe bei der Vorrichtung vom Anspruch 1 zum Zusammenfügen von wenigstens zwei jeweils ein Innenloch aufweisenden Substraten, die einen den Innenlöchern der Substrate angepaßten Stift aufweist, der wenigstens zwei radial zum Stift bewegbare Nasen aufweist dadurch gelöst, daß, die Nasen gerade Außenflächen besitzen, auf denen die Innenlochkanten der Substrate beim Bewegen der Nasen zum Stift hin nach unten gleiten. Der Stift ermöglicht, daß die Substrate beim Zusammenfügen genau zentrisch und parallel zueinander geführt werden. Insbesondere werden die Substrate durch die geraden Außenflächen der Nasen planparallel zueinander gehalten und die geraden Außenflächen sehen beim zusammenfügen einen konstanten Bewegungsablauf vor. Durch die Verwendung des Stifts können die Anforderungen an eine Handhabungsvorrichtung erheblich verringert werden, so daß hiermit assoziierte Kosten entfallen.

Bei einer besonders bevorzugten Ausführungsform der Erfindung halten die Nasen die Substrate vor dem Zusammenfügen beabstandet, so daß sie auf dem Stift abgelegt, und anschließend in eine Zusammenfügstation transportiert werden können, in der sie zusammengefügt werden. Vorteilhafterweise ist der Stift ein Zentrierstift, der wenigstens im unteren Bereich einen Außenumfang aufweist, der dem Innenumfang der Innenlöcher der Substrate entspricht, um diese genau zueinander auszurichten.

Für eine besonders einfache und kostengünstige Ausgestaltung der Erfindung sind die Nasen schwenkbar am Zentrierstift angebracht. Vorteilhafterweise sind die Nasen durch wenigstens eine Vorspanneinheit nach außen vorgespannt, um ein kontrolliertes Zusammenfügen der Substrate zu erreichen. Dabei weist die Vorspanneinheit vorzugsweise wenigstens eine Feder auf.

Bei einer Ausführungsform der Erfindung sind die Nasen durch Druckausübung auf die Substrate zum Stift hin bewegbar, so daß die Substrate durch einfache Druckausübung kontrolliert zusammengefügt werden können.

Bei einer alternativen Ausführungsform der Erfindung ist ein die Nasen radial bewegendes Betätigungselement vorgesehen, welches die Bewegung der Nasen steuert. Zu diesem Zweck sind die Nasen vorzugsweise als Hebelarme ausgebildet, um eine einfache Betätigung derselben zu ermöglichen. Vorteilhafterweise ist das Betätigungselement zwischen die Nasen einführbar und ist konisch ausgebildet, um auf einfache Weise eine gleichmäßige Bewegung der Nasen zu ermöglichen. Für eine gute Gleitbewegung zwischen den Nasen und dem Betätigungselement sind die Enden der Nasen vorteilhafter Weise abgerundet.

Bei einer weiteren Ausführungsform der Erfindung ist die Vorspannung der Nasen veränderbar, um ein gesteuertes Gleiten der Substrate entlang der Außenflächen der Nasen zu ermöglichen. Vorteilhafterweise ist ein im Stift angeordneter Konus vorgesehen, der entgegen einer Vorspannung bewegbar ist. Dabei ist der Konus vorzugsweise gegen eine Feder bewegbar.

Vorzugsweise ist zwischen dem Konus und den Nasen ein Vorspannelement vorgesehen, um eine kontrollierbare Vorspannung der Nasen vorzusehen. Die nach außen gerichtete Vorspannung der Nasen ist dabei vorzugsweise über eine Bewegung des Konus veränderbar.

Weitere Merkmale, Vorteile und Einzelheiten der Erfindung werden nachfolgend anhand von bevorzugten Ausführungsbeispielen unter Bezugnahme auf die Figuren erläutert. Es zeigen:
- Fig. 1: eine schematische Schnittansicht durch einen Zentrierstift gemäß der vorliegenden Erfindung vor dem Zusammenfügen zweier Substrate;
- Fig. 2: eine schematische Schnittansicht des Zentrierstifts gemäß Fig. 1, während dem Zusammenfügen der Substrate;
- Fig. 3: eine schematische Schnittansicht des Zentrierstifts und einer Substrat-Handhabungsvorrichtung zum Entnehmen der Substrate vom Stift;
- Fig. 4: eine Prozeßstation zum Zusammenfügen zweier Substrate, welche einen Zentrierstift gemäß der vorliegenden Erfindung beinhaltet, und zwar in einer geöffneten Position;
- Fig. 5: eine Ansicht ähnlich wie Fig. 4, wobei die Prozeßstation in einer geschlossenen Position vor dem Zusammenfügen zweier Substrate gezeigt ist;
- Fig. 6: eine ähnliche Ansicht zu Fig. 4, wobei die Prozeßstation während dem Zusammenfügen zweier Substrate gezeigt ist;
- Fig. 7: eine Ansicht ähnlich zu Fig. 4, einer alternativen Prozeßstation zum Zusammenfügen zweier Substrate.

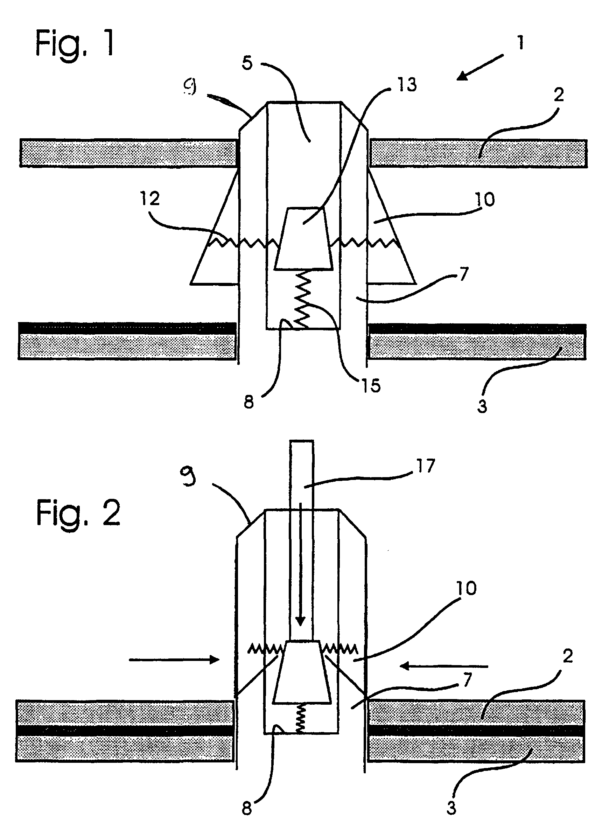

Die Figuren 1 bis 3 zeigen ein erstes Ausführungsbeispiel eines Zentrier- und Haltestifts 1 zur Aufnahme von Substraten 2, 3. Der Stift ist in einer nicht dargestellten Aufnahme aufgenommen, die ein Auflage für die Substrate 2,3 definiert. Eine Zusammenfügstation, in der der Stift einsetzbar ist, ist beispielsweise in der auf dieselbe Anmelderin zurückgehenden und am selben Tag, wie die vorliegende Anmeldung eingereichten Patentanmeldung mit dem Titel "Vorrichtung und Verfahren zum Herstellen eines Datenträgers " gezeigt, die, um Wiederholungen zu vermeiden, zum Gegenstand der vorliegenden Anmeldung gemacht wird.

Der Stift 1 besitzt einen nach oben geöffneten Hohlraum 5, der seitlich durch eine Seitenwand 7 und nach unten durch einen Boden 8 des Stifts 1 begrenzt ist. Der Außenumfang der Wand 7 ist an die Form der Innenlöcher der Substrate 2, 3 angepaßt und insbesondere in einem unteren Bereich besitzt der Stift einen genau geschliffenen Außenumfang, um eine gute Zentrierung und Führung der beiden Substrate 2, 3 zueinander sicherzustellen. An ihrem oberen Ende ist die Wand abgeschrägt, so daß sie eine sich nach oben verjüngende Schräge 9 definiert. Die Schräge 9 ermöglicht eine Zentrierung und Führung der Substrate bei der Aufnahme auf dem Stift.

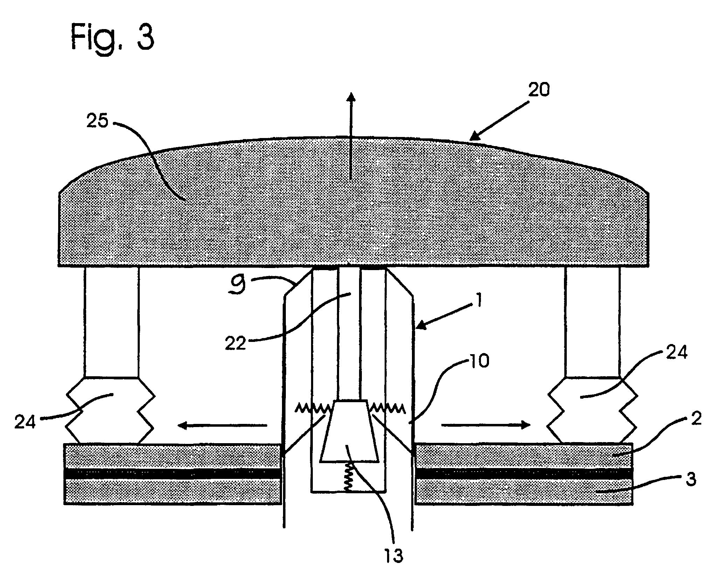

An der Seitenwand 7 des Stifts 1 ist eine Vielzahl von Nasen 10 angebracht, von denen zwei in den Figuren 1 bis 3 dargestellt sind. Bei der derzeit bevorzugten Ausführung sind vier Nasen 10 vorgesehen. Die Nasen 10 sind in geeigneter Weise schwenkbar an der Wand 7 des Stifts 1 angebracht, um zwischen den in Figur 1 und 2 gezeigten Positionen schwenkbar zu sein.

Die Nasen 10 werden über Druckfedern 12 vom Stift 1 weg radial nach außen in die in Figur 1 gezeigte Position vorgespannt, wie nachfolgend noch näher beschrieben wird. Im Hohlraum 5 des Stifts 1 ist ein Konus 13 vorgesehen, der sich nach oben verjüngt. Der Konus 13 ist innerhalb des Hohlraums 5 vertikal beweglich angeordnet, und über eine Feder 15 nach oben in die in Figur 1 gezeigte Position vorgespannt.

Die Druckfedern 12 stützen sich mit einem Ende an dem Konus 13 ab, und mit ihrem anderen Ende an den Nasen 10, um diese nach außen zu drücken. Dabei können die Federn 12 entlang der konischen Fläche des Konus 13 gleiten, wodurch die nach außen gerichtete Vorspannkraft verändert wird.

Ein nicht dargestellter Federring erstreckt sich um das untere Ende der Nasen, um diese zu dem Stift 1 hin in die in Figur 1 gezeigte Position zu ziehen. Dabei ist die Federkonstante des Federrings so gering, daß sie die durch die Druckfedern 12 ausgeübte, nach außen gerichtete Vorspannkraft nicht übersteigt, solange sich der Konus 13 und somit die innere Abstützung der Federn 12 in der in Figur 1 gezeigten Position befindet. Wenn der Konus 13 wie in Figur 2 über einen Stab 17 nach unten gedrückt wird, gleiten die Federn 12 entlang der konischen Fläche des Konus 13, wodurch die nach außen gerichtete Vorspannkraft der Federn 12 verringert wird. In dieser Position reicht die Federkonstante des Federrings aus, die Nasen 10 zum Stift 1 hin in die in Figur 2 gezeigte Position zu ziehen.

Während der Bewegung der Nasen 10 zwischen der in Figur 1 gezeigten Position und der in Figur 2 gezeigten Position gleitet das Substrat 2 entlang der Außenflächen der Nasen 10 in Richtung des Substrats 3. Dabei sehen die geraden Außenflächen der Nasen 10 eine gute Führung des Substrats 2 vor, was ein Verkippen des Substrats verhindert. Diese Führung wird bei im wesentlichen konstantem Kraftverlauf beibehalten, bis das Substrat 2 auf dem Substrat 3 liegt.

Der Stab 17 kann Teil eines nicht dargestellten Druckstempels sein, der zum Zusammendrücken der Substrate 2, 3 dient.

Anstelle der oben beschriebenen Anordnung von Druckfedern 12 zum Nachaußendrücken der Nasen 10 und einem nicht dargestellten Federring zum Zusammenziehen der Nasen wäre es auch möglich, daß die Nasen 10 direkt den Konus 13 kontaktieren und in der in Figur 1 gezeigten Position durch den Konus 13 nach außen gedrückt werden. Wenn der Konus 13 in die in Figur 2 gezeigte Position bewegt wird, gleiten die Nasen entlang der konischen Oberfläche des Konus 13 und werden durch den nicht dargestellten Federring in die in Figur 2 gezeigte Position gezogen. Der selbe Effekt könnte auch erreicht werden, wenn die in Figur 1 gezeigten Federn 12 als Zugfedern ausgebildet wären.

Figur 3 zeigt eine Substrat-Handhabungsvorrichtung 20 zum Entnehmen der zusammengefügten Substrate 2, 3 vom Stift 1. Die Handhabungsvorrichtung 20 weist einen Distanzstab 22 zum Herunterdrücken des Konus 13 auf, um die Nasen 10 vor der Entnahme in ihre eingefahrene Position gemäß Fig. 3 zu bewegen. Die Handhabungsvorrichtung 20 weist ferner Vakuumfinger 24 auf, von denen zwei in Figur 3 dargestellt sind, mit denen die Substrate 2, 3 an die Handhabungsvorrichtung 20 angesaugt und daran gehalten werden. Die Vakuumfinger 24 sind bezüglich eines Hauptkörpers 25 der Handhabungsvorrichtung 20 höhenverschiebbar, wie beispielsweise mittels eines Balgenmechanismus, um eine höhenmäßige Relativbewegung zwischen dem Distanzstab 22 und den Vakuumfingern 24 zu ermöglichen.

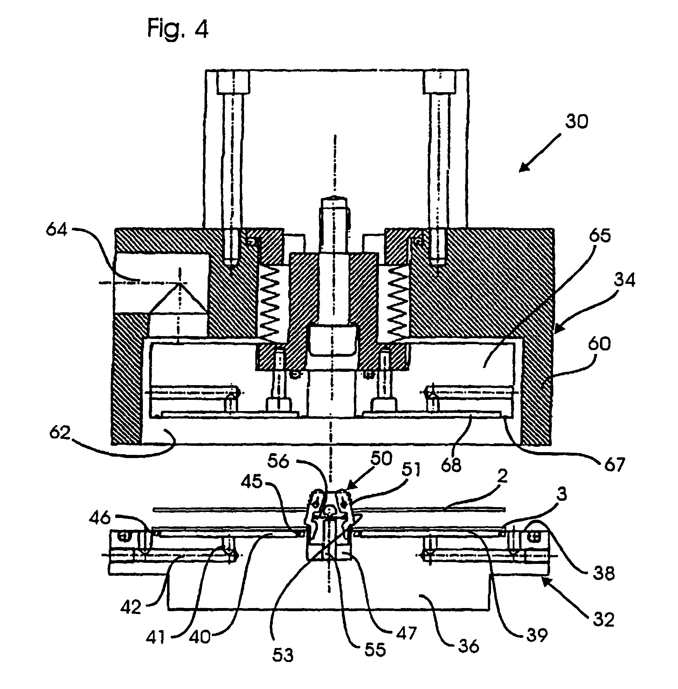

Nachfolgend wird eine Ausführungsform der Erfindung anhand der Fig. 4 bis 7 beschrieben, wobei dieselben Bezugszeichen wie in den Fig. 1 bis 3 verwendet werden, sofern gleiche oder gleichartige Teile betroffen sind.

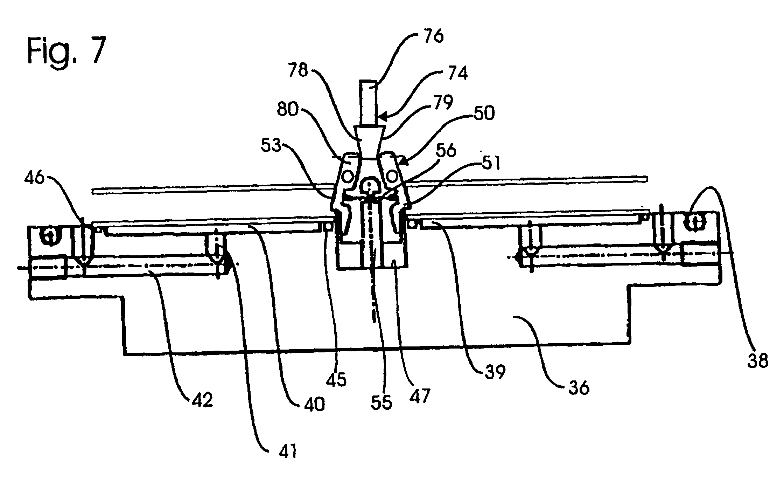

Fig. 4 zeigt eine Prozeßstation 30 zum Zusammenfügen von Substraten 2, 3 zur Bildung einer DVD. Die Prozeßstation 30 weist einen Auflageteil 32, sowie einen Prozeßkammerteil 34 auf. Der Auflageteil wird im wesentlichen durch einen Grundkörper 36 gebildet, der eine Auflage für das Substrat 3 definiert. Wie am besten in Fig. 7 zu sehen ist, besitzt der Grundkörper 36 eine nach oben weisende Fläche 38, die in einem unter dem Substrat befindlichen Teil eine Vertiefung 39 aufweist, um bei aufgelegtem Substrat eine Kammer 40 zwischen dem Substrat 3 und dem Grundkörper 36 zu bilden. Die Kammer 40 ist über Leitungen 41, 42 mit einem unter Druck stehenden Fluid beaufschlagbar, um während eines Zusammenfügvorgangs einen nach oben gerichteten Druck gegen das Substrat auszuüben. Über in der Fläche 38 angeordnete O-Ringe 45, 46 wird die Kammer nach außen abgedichtet, sodaß während des Zusammenfügvorgangs kein Fluid aus der Kammer entweicht.

In der Fläche 38 ist im Mittelbereich eine weitere Vertiefung 47 ausgebildet, in der ein Zentrier- und Haltestift 50 aufgenommen ist. Der Stift 50 weist schwenkbar daran angebrachte Nasen 51 auf, die gerade Außenflächen 53 besitzen. Der Stift 1 weist einen radial bezüglich der Nasen 51 innen liegenden Zapfen 55 auf, der sich von unten zwischen die Nasen 51 erstreckt, und zwar bis zur Höhe der Schwenkanbringung der Nasen. Zwischen den Nasen und dem Zapfen sind Druckfedern 56 angeordnet, die die Nasen 51 radial nach außen drücken. Dabei bilden die Nasen 51 eine sich nach unten erweiternde konische Form, auf der ein Substrat 2 abgelegt werden kann. Durch die Federn 56 werden die Nasen mit einer ausreichenden Kraft nach außen gedrückt, um das Substrat 2 in der in Fig. 4 gezeigten Position zu halten. Um die Substrate 2, 3 zusammenzufügen wird von oben, über eine nachfolgend noch beschriebene Vorrichtung, ein Druck auf das Substrat 2 angelegt, der ausreicht, die Federkraft zu überwinden und ein nach innen Schwenken der Nasen 51 zu bewirken. Dabei gleiten das Substrat 2 entlang der geraden Außenflächen 53 der Nasen 51 und wird während der Gleitbewegung genau geführt, wodurch ein Verkippen des Substrats 2 verhindert wird. Das Substrat 2 wird im wesentlichen solange geführt, bis es mit dem Substrat 3 in Kontakt kommt und mit diesem zusammengedrückt wird.

Der Prozeßkammerteil 34 weist ein Gehäuse 60 auf, das eine nach unten geöffnete Kammer 62 definiert. Das Gehäuse 60 und der Auflageteil 32 sind relativ zueinander bewegbar, wobei das Gehäuse auf der Oberfläche 38 des Auflageteils 32 positionierbar ist, um die Kammer 62 in dem Gehäuse 60 nach unten abzuschließen. Die Kammer 62 kann über eine Leitung 64 entlüftet werden, sodaß ein Zusammenfügvorgang der Substrate 2, 3 im Vakuum erfolgen kann.

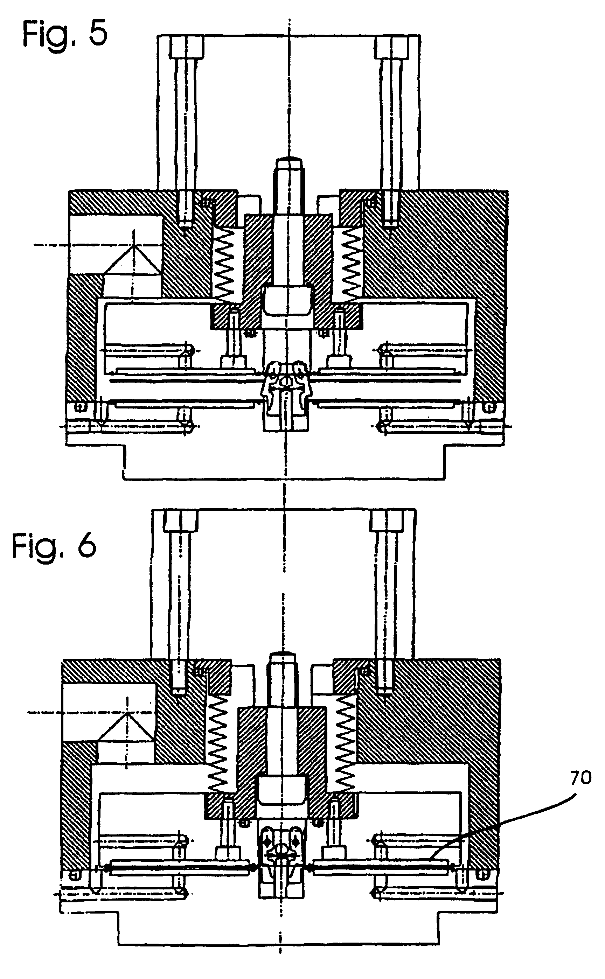

In der Kammer 62 ist eine beweglicher Stempel 65 angeordnet, der in einer nach unten weisenden Oberfläche 67 eine Vertiefung 68 aufweist, um zwischen dem Stempel 60 und dem Substrat 2 eine Kammer 70 zu bilden wenn der Stempel 60 in Kontakt mit dem Substrat 2 bewegt ist, wie in Fig. 6 gezeigt ist. Die Kammer 70 ist durch O-Ringe nach außen bzw. nach innen abgedichtet. Die Kammer 70 ist in gleicher Weise wie die Kammer 40 mit einem Fluid beaufschlagbar, um das Substrat 2 während eines Fügevorgangs nach unten gegen das Substrat 3 zu drücken. Ein Zusammendrücken der Substrate über eine in die Kammern 40, 70 eingeleitetes Fluid sieht einen gleichmäßigen Flächendruck an den Substraten vor und gewährleistet somit einen guten Fügevorgang.

Anhand der Fig. 4 bis 6 wird nun eine Zusammenfügen der Substrate erläutert. Wie in Fig. 4 zu sehen ist, ist ein erstes Substrat 3 auf der Oberfläche 38 des Auflageteils 32 abgelegt, und ein zweites Substrat ist auf den Nasen 51 des Stifts 50 abgelegt, wodurch ein definierter Abstand zwischen den Substraten beibehalten wird. Das Gehäuse 60 des Prozeßkammerteils 34 ist von der Oberfläche 38 des Auflageteils 32 entfernt.

Anschließend wird das Gehäuse 60, wie in Fig. 5 gezeigt ist, auf der Oberfläche 38 Positioniert, um eine geschlossenen Prozeßkammer 62 zu bilden. Nun wird die Prozeßkammer über die Leitung 64 entlüftet, um das nachfolgende Zusammenfügen der Substrate unter Vakuumbedingungen durchzuführen. Hierdurch werden Lufteinschlüsse zwischen den Substraten beim Zusammenfügen verhindert.

Der Stempel 65 wird abgesenkt, bis er mit dem Substrat 2 in Kontakt kommt, und dann wird das Substrat 2 durch den sich weiter absenkenden Stempel 65 nach unten gedrückt. Dabei werden die Innenlochkanten des Substrats 2 durch die sich nach innen schwenkenden Nasen 51 geführt, wodurch ein Verkippen des Substrats 2 verhindert wird.

Sobald das Substrat 2 so weit abgesenkt ist, daß es mit dem Substrat 3, insbesondere mit einer darauf befindlichen Klebeschicht in Kontakt kommt, wie es in Fig. 6 gezeigt ist, wird unter Druck stehendes Fluid in die Kammern 40, 70 eingeleitet, um die Substrate 2, 3 kontrolliert zusammenzudrücken.

Statt der oben beschriebenen Zusammenfügvorrichtung 30 kann selbstverständlich auch eine andere geeignete Vorrichtung in Verbindung mit dem Zentrier- und Haltestift verwendet werden. Ein Beispiel für eine derartige Vorrichtung ist in der auf dieselbe Anmelderin zurückgehenden und am selben Tag eingereichten Patentanmeldung mit dem Titel "Vorrichtung und Verfahren zum Herstellen eines Datenträgers" beschrieben, die insofern zum Gegenstand der vorliegenden Anmeldung gemacht wird um Wiederholungen zu vermeiden.

Fig. 7 zeigt eine Auflageeinheit 32 einer Prozeßstation 30 gemäß der Fig. 4 bis 7, wobei zusätzlich ein Betätigungselement 74 gezeigt ist, das zum Schwenken der Nasen 51 des Stifts 50 geeignet ist. Das Betätigungselement 74 weist einen Schaft 76, sowie einen daran befestigten Konus 78 auf. Natürlich könnten der Schaft 76 und der Konus 78 auch einteilig ausgebildet sein. Der Konus 78 weist sich nach unten verjüngende Oberflächen 79 auf, die zwischen die Nasen 51 des Stifts 50 eingeführt werden können, wie in Fig. 7 angedeutet ist. Wenn der Konus zwischen die Nasen 51 eingeführt wird, kommt er mit abgerundeten Endteilen 80 der Nasen 51 in Kontakt und drückt diese bei einer weiter nach unten gerichteten Bewegung des Konus 78 auseinander. Dadurch werden die Nasen, insbesondere die geraden Außenflächen 53, entgegen der nach außen gerichteten Vorspannung der Federn 56 in Richtung des Stifts 50 nach innen geschwenkt. Der Konus kann die Nasen vollständig nach innen schwenken, um eine Bewegung von Substraten entlang des Stifts 50 zu ermöglichen.

Das Betätigungselement 74 ist beispielsweise mit dem Stempel 65, gemäß den Fig. 4 bis 6 assoziiert, um ein kontrolliertes ablegen des Substrats 2 zu ermöglichen. Das Betätigungselement 74 kann aber auch mit einer Substrat-Entnahmeeinheit assoziiert sein, um eine freies Abnehmen der Substrate 2, 3 von dem Stift 50 nach dem Zusammenfügen zu erlauben.

Die Erfindung wurde zuvor anhand bevorzugter Ausführungsformen der Erfindung beschrieben, ohne jedoch darauf beschränkt zu sein. Insbesondere ist die Vorrichtung nicht nur dafür einsetzbar, Substrate zur Bildung von DVD's zusammenzufügen. Die Erfindung ist auch bei einer Vorrichtung zum Beschichten eines optischen Datenträgers anwendbar, wie sie beispielsweise in der auf dieselbe Anmelderin zurückgehenden, am selben Tag wie die vorliegende Anmeldung eingereichten Patentanmeldung mit dem Titel "Vorrichtung und Verfahren zum Beschichten eines optisch lesbaren Datenträgers" beschrieben ist. Um Wiederholungen zu vermeiden wird diese Anmeldung zum Gegenstand der vorliegenden Anmeldung gemacht. Ferner ist die Vorrichtung auch nicht auf das Zusammenfügen von zwei Substraten beschränkt. Vielmehr können auch mehrere Substrate entweder sequentiell oder auch im wesentlichen gleichzeitig zusammengefügt werden.

## Patentansprüche

1. Vorrichtung zum Zusammenfügen von wenigstens zwei jeweils ein Innenloch aufweisenden Substraten (2,3), mit einem den Innenlöchern der Substrate angepaßten Stift (1, 50), der wenigstens zwei radial zum Stift (1, 50) bewegbare Nasen (10, 51) aufweist, **dadurch gekennzeichnet, daß** die Nasen gerade Außenflächen besitzen, auf denen die Innenlochkanten der Substrate beim Bewegen der Nasen (10, 51) zum Stift (1, 50) hin nach unten gleiten.

2. Vorrichtung nach Anspruch 1, **dadurch gekennzeichnet, daß** die Nasen (10, 51) die Substrate (2, 3) vor dem Zusammenfügen beabstandet halten.

3. Vorrichtung nach Anspruch 1 oder 2, **dadurch gekennzeichnet, daß** der Stift (1, 50) ein Zentrierstift ist.

4. Vorrichtung nach einem der vorhergehenden Ansprüche, **dadurch gekennzeichnet, daß** die Nasen (10, 51) schwenkbar am Zentrierstift angebracht sind.

5. Vorrichtung nach einem der vorhergehenden Ansprüche, **gekennzeichnet durch** wenigstens eine Vorspanneinheit (12, 56) zum Vorspannen der Nasen (10, 51) nach außen.

6. Vorrichtung nach einem Anspruch 5, **dadurch gekennzeichnet, daß** die Vorspanneinheit wenigstens eine Feder (12, 56) aufweist.

7. Vorrichtung nach einem der vorhergehenden Ansprüche, **dadurch gekennzeichnet, daß** die Nasen (10, 51) durch Druckausübung auf die Substrate (2, 3) zum Stift (1, 50) hin bewegbar sind.

8. Vorrichtung nach einem der vorhergehenden Ansprüche, **gekennzeichnet durch** ein die Nasen (10, 51) radial bewegendes Betätigungselement (13, 78).

9. Vorrichtung nach einem der vorhergehenden Ansprüche, **dadurch gekennzeichnet, daß** die Nasen (51) als Hebelarme ausgebildet sind.

10. Vorrichtung nach Anspruch 8 oder 9, **dadurch gekennzeichnet, daß** das Betätigungselement (78) zwischen die Nasen (51) einführbar ist.

11. Vorrichtung nach einem der Ansprüche 8 bis 10, **dadurch gekennzeichnet, daß** das Betätigungselement (13, 78) konisch ist.

12. Vorrichtung nach einem der Ansprüche 8 bis 11, **dadurch gekennzeichnet, daß** die Nasen (51) an ihrem zum Betätigungselement (78) weisenden Ende abgerundet sind.

13. Vorrichtung nach einem der vorhergehenden Ansprüche, **dadurch gekennzeichnet, daß** die Vorspannung der Nasen (10, 51) veränderbar ist.

14. Vorrichtung nach einem der vorhergehenden Ansprüche, **gekennzeichnet durch** einen im Stift (1) angeordneten Konus (13), der entgegen einer Vorspannung (15) bewegbar ist.

15. Vorrichtung nach Anspruch 14, **dadurch gekennzeichnet, daß** der Konus (13) gegen eine Feder (15) bewegbar ist.

16. Vorrichtung nach einem der Ansprüche 14 oder 15, **gekennzeichnet durch** ein zwischen dem Konus (13) und den Nasen (10) angeordnetes Vorspannelement (12).

17. Vorrichtung nach einem der Ansprüche 14 bis 16, **dadurch gekennzeichnet, daß** die nach außen gerichtete Vorspannung der Nasen (10) über eine Bewegung des Konus (13) veränderbar ist.

18. Vorrichtung nach einem der vorhergehenden Ansprüche, **gekennzeichnet durch** ein die Nasen (10) nach innen ziehendes Zugelement, mit einer Zugkraft, die nicht ausreicht, die normalerweise nach außen gerichtete Vorspannung der Nasen (10) zu überwinden.

19. Vorrichtung nach Anspruch 18, **dadurch gekennzeichnet, daß** die Zugkraft des Zugelements bei verringerter nach außen gerichteter Vorspannung die Nasen (10) nach Innen zieht.

20. Vorrichtung nach einem der Ansprüche 18 oder 19 , **dadurch gekennzeichnet, daß** das Zugelement ein an den Nasen (10) angebrachter Federring ist.

21. Vorrichtung nach Anspruch 20, **dadurch gekennzeichnet, daß** der Federring am Innenumfang der Nasen (10) angeordnet ist.

22. Vorrichtung nach einem der vorhergehenden Ansprüche, **gekennzeichnet durch** vier Nasen (10, 51).

## Claims

1. Device for adjoining at least two substrates (2, 3), which each have a respective inner hole, with a pin (1, 50) which is matched to the inner holes of the substrates and which has at least two noses (10, 51) radially movable relative to the pin (1, 50), **characterised in that** the noses have straight outer surfaces on which the inner hole edges of the substrates slide downwardly on movement of the noses (10, 51) towards to the pin (1, 50).

2. Device according to claim 1, **characterised in that** the noses (10, 51) keep the substrates (2, 3) at a spacing prior to joining together.

3. Device according to claim 1 or 2, **characterised in that** the pin (1, 50) is a centring pin.

4. Device according to any one of the preceding claims, **characterised in that** the noses (10, 51) are pivotably mounted at the centring pin.

5. Device according to any one of the preceding claims, **characterised by** at least one biassing unit (12, 56) for biassing the noses (10, 51) outwardly.

6. Device according to claim 5, **characterised in that** the biassing unit comprises at least one spring (12, 56).

7. Device according to one of the preceding claims, **characterised in that** the noses (10, 51) are movable towards the pin (1, 50) by exertion of pressure on the substrates (2, 3).

8. Device according to one of the preceding claims, **characterised by** an actuating element (13, 78) radially moving the noses (10, 51).

9. Device according to one of the preceding claims, **characterised in that** the noses (51) are constructed as lever arms.

10. Device according to claim 8 or 9, **characterised in that** the actuating element (78) is introducible between the noses (51).

11. Device according to one of claims 8 to 10, **characterised in that** the actuating element (13, 78) is conical.

12. Device according to one of claims 8 to 11, **characterised in that** the noses (51) are rounded at their ends facing the actuating element (78).

13. Device according to one of the preceding claims, **characterised in that** the biassing of the noses (10, 51) is variable.

14. Device according to one of the preceding claims, **characterised by** a cone (13) which is arranged in the pin (1) and is movable against a bias (15).

15. Device according to claim 14, **characterised in that** the cone (13) is movable against a spring (15).

16. Device according to one of claims 14 and 15, **characterised by** a biassing element (12) arranged between the cone (13) and the noses (10).

17. Device according to one of claims 14 to 16, **characterised in that** the outwardly directed bias of the noses (10) is variable by a movement of the cone (13).

18. Device according to one of the preceding claims, **characterised by** a tension element, which draws the noses (10) inwardly, with a tension force which is not sufficient to overcome the normally outwardly directed bias of the noses (10).

19. Device according to claim 18, **characterised in that** the tension force of the tension element draws the noses (10) inwardly when the outwardly directed bias is reduced.

20. Device according to one of claims 18 and 19, **characterised in that** the tension element is a spring ring mounted at the noses (10).

21. Device according to claim 20, **characterised in that** the spring ring is arranged at the inner circumference of the noses (10).

22. Device according to one of the preceding claims, **characterised by** four noses (10, 51).

## Revendications

1. Dispositif d'assemblage d'au moins deux substrats (2, 3) présentant chacun un trou intérieur, avec une tige (1, 50) adaptée aux trous intérieurs des substrats, qui présente au moins deux mentonnets (10, 51) déplaçables radialement à la tige (1, 50), **caractérisé en ce que** les mentonnets possèdent des faces extérieures droites sur lesquelles les arêtes de trou intérieur des substrats, lors du déplacement des mentonnets (10, 51) vers la tige (1, 50), glissent vers le bas.

2. Dispositif selon la revendication 1, **caractérisé en ce que** les mentonnets (10, 51) maintiennent les substrats (2, 3) avant l'assemblage à une distance.

3. Dispositif selon la revendication 1 ou 2, **caractérisé en ce que** la tige (1, 50) est une tige de centrage.

4. Dispositif selon l'une des revendications précédentes, **caractérisé en ce que** les mentonnets (10, 51) sont disposés d'une manière pivotante à la tige de centrage.

5. Dispositif selon l'une des revendications précédentes, **caractérisé par** au moins une unité de précontrainte (12, 56) pour précontraindre les mentonnets (10, 51) vers l'extérieur.

6. Dispositif selon la revendication 5, **caractérisé en ce que** l'unité de précontrainte présente au moins un ressort (12, 56).

7. Dispositif selon l'une des revendications précédentes, **caractérisé en ce que** les mentonnets (10, 51) sont déplaçables en exerçant une pression sur les substrats (2, 3) vers la tige (1, 50).

8. Dispositif selon l'une des revendications précédentes, **caractérisé par** un élément d'actionnement (13, 78) déplaçant les mentonnets (10, 51) radialement.

9. Dispositif selon l'une des revendications précédentes, **caractérisé en ce que** les mentonnets (51) sont réalisés sous forme de bras de levier.

10. Dispositif selon la revendication 8 ou 9, **caractérisé en ce que** l'élément d'actionnement (78) est insérable entre les mentonnets (51).

11. Dispositif selon l'une des revendications 8 à 10, **caractérisé en ce que** l'élément d'actionnement (13, 78) est conique.

12. Dispositif selon l'une des revendications 8 à 11, **caractérisé en ce que** les mentonnets (51) sont arrondis à leur extrémité orientée vers l'élément d'actionnement (78).

13. Dispositif selon l'une des revendications précédentes, **caractérisé en ce que** la précontrainte des mentonnets (10, 51) peut être modifiée.

14. Dispositif selon l'une des revendications précédentes, **caractérisé par** un cône (13) disposé dans la tige (1) qui est déplaçable contre une précontrainte (15).

15. Dispositif selon la revendication 14, **caractérisé en ce que** le cône (13) est déplaçable contre un ressort (15).

16. Dispositif selon l'une des revendications 14 ou 15, **caractérisé par** un élément de précontrainte (12) disposé entre le cône (13) et les mentonnets (10).

17. Dispositif selon l'une des revendications 14 à 16, **caractérisé en ce que** la précontrainte dirigée vers l'extérieur des mentonnets (10) est modifiable par un déplacement du cône (13).

18. Dispositif selon l'une des revendications précédentes, **caractérisé par** un élément de traction tirant les mentonnets (10) vers l'intérieur, avec une force de traction qui n'est pas suffisante pour surmonter la précontrainte dirigée normalement vers l'extérieur des mentonnets (10).

19. Dispositif selon la revendication 18, **caractérisé en ce que** la force de traction de l'élément de traction, lors d'une précontrainte diminuée, dirigée vers l'extérieur, tire les mentonnets (10) vers l'intérieur.

20. Dispositif selon l'une des revendications 18 ou 19, **caractérisé en ce que** l'élément de traction est une rondelle-ressort disposée aux mentonnets (10).

21. Dispositif selon la revendication 20, **caractérisé en ce que** la rondelle-ressort est disposée au pourtour intérieur des mentonnets (10).

22. Dispositif selon l'une des revendications précédentes, **caractérisé par** quatre mentonnets (10, 51).
